# EUROPEAN PATENT SPECIFICATION

(11) **EP 1 028 888 B1**
(45) Date of publication and mention of the grant of the patent: **27.02.2002**
(21) Application number: 98952851.8
(22) Date of filing: 04.11.1998
(51) Int. Cl.: B62M 1/04, B62K 3/00, B62K 15/00

(54) **A PERSONAL VEHICULAR ACCESSORY**
PERSONENFAHRZEUGZUBEHÖR
ACCESSOIRE SOUS FORME DE VEHICULE PERSONNEL

(30) Priority: 05.11.1997 GB 9723350
(43) Date of publication of application: 23.08.2000
(73) Proprietor: Peake, Malcolm Edward Solomon, London SE16 1PY (GB)
(72) Inventor: Peake, Malcolm Edward Solomon, London SE16 1PY (GB)
(74) Representative: Sanderson, Laurence Andrew
(86) International application number: GB9803283
(87) International publication number: WO9922980

(56) References cited:
- WO-A-96/26860
- DE-A- 3 537 522
- DE-U- 9 412 354
- DE-U- 29 610 975
- FR-A- 606 650
- FR-A- 2 670 740
- NL-C- 1 005 416
- US-A- 4 582 342

## Description

This invention relates to a personal vehicular accessory intended primarily to impart wheeled mobility to a commuter's pedestrian phase.

The fundamental perception which is the departure point for the present invention is that many of the world's urban populations commute daily to and from their workplaces, usually indeed travelling part of the way on public transportation systems but always starting and ending each journey as pedestrians. Any wheeled vehicular device that could enhance the mobility of individual-commuters when otherwise in their pedestrian phase could greatly benefit them, but only of course provided that the benefits of enhanced mobility were not outweighed by other unacceptable disadvantages. One might think that a pair of roller skates or a skate-board would make the perfect personal vehicular accessory, but the dangers associated with their use make them useless for the kind of purpose here envisaged. And it is the failure till now to find any acceptable balance between the mobility-enhancing advantages of a vehicular device during a commuter's pedestrian phase and its disadvantages elsewhere en route that must explain the fact that urban populations throughout the world still continue to commute between home and workplace in the time-honoured manner, so far as possible on public transportation but at least partly on foot.

For the purpose envisaged by this invention one needs a vehicular device which is very simple, safe and reliable in use, but no significant encumbrance when not in use, or in short what is here termed a personal vehicular accessory - but no such thing exists today.

Of course, many different kinds of private transportation are already available. Over the last hundred years or more there have been tremendous developments in almost every kind of vehicle, and not only motorized automobile vehicles such as motor-cycles and motor cars but also human-powered vehicles such as bicycles have become increasingly sophisticated. One might think that the modern conventional bicycle is unrivaled as a form of individual transportation, and for most purposes so it is. Indeed there are particular places, e.g. Holland, where very many people ride certain distances to and from their workplaces on bicycles. Even so, and despite the immense number of bicycles owned by the public both at home and abroad, they are in general little used for travel to and from work in urban environments, except perhaps in some exceptional locations. One reason for that certainly is that even with bicycles there is a parking problem at one's destination. A probably more significant reason is that in larger urban conglomerations the distance between home and workplace (or wherever) is so great that part of it really has to be covered in speedy public transport, yet it is always difficult and often impossible for a commuter to take a bicycle onto a 'bus or train, because the typical bicycle is far too bulky.

A solution to these inter-related problems of bulk might seem to lie in the possibility of arranging for the bicycle frame to be folded up when not in use as a vehicle, and attempts have certainly been made along these lines. Miniature motor-cycles have been designed that can be folded up into an even smaller compass, so as thereby to enable them to be carried as auxiliaries in the luggage or other storage compartments within larger vehicles, such as motor cars, boats or even aircraft. These foldable motor-cycles are however not only still too bulky and heavy to be a personal accessory but for various obvious reasons they are also quite unsuitable to be carried aboard public transport. Indeed, to bring a petrol-driven internal combustion engine into a 'bus, train or aircraft would in most places be regarded as a danger to public safety, and thus be illegal.

That problem would not beset a human-powered bicycle, and foldable, pedal-powered bicycles have been devised, but none to my knowledge has ever achieved any widespread public acceptance, and certainly not as what is here termed a personal vehicular accessory. However much one may fold up a conventional bicycle, the sizes of its wheels and of its rotary pedal cranks both make it impossible to reduce the bulk of the folded machinery enough to make it a convenient personal accessory. Moreover, the more complex and ingenious the folding arrangement, the greater the cost of manufacture and the likelihood of malfunction.

The task of providing a personal vehicular accessory with the qualities needed for widespread public acceptance has in fact until now seemed insoluble. However, the further perception on which the present invention is based lies in the recognition that one key to the resolution of these apparently-conflicting requirements is to be found by adopting a scooter-type construction of vehicle. The term "scooter" is here broadly used in its normal, colloquial sense, as defined for instance in "Collins Dictionary of the English Language", thus as meaning "a child's vehicle consisting of a low footboard mounted between two small wheels with a handlebar.... [and]..... propelled by pushing one foot along the ground".

Child's scooters have long been known, but it is probably true to say that they are about the only form of vehicle that has till now escaped any serious technical development, presumably because they have been classed as mere playthings for infants, destined for a short-lived, transitional use until the child learns to ride a bicycle proper. And of course conventional scooters do not come up for consideration if one is aiming to design a vehicle that is both speedy and comfortable, for scooters can be neither of these things - but on the contrary demand much exertion from the rider to achieve at best only low speeds, while leaving the rider standing rather than seated, and moreover unprotected against the elements. It is no wonder that scooters have been neglected.

And yet the unsophisticated simplicity of the conventional child's scooter does have great virtues, amongst them the strength of even a lightweight, low-cost construction, and the absence of any mechanical complexity which might otherwise lead to maintenance and repair problems. The present invention is based in part on the recognition that a scooter-type design offers a form of transportation ideally suited for low-cost mass-production and which could be used especially in urban environments for enabling people en masse to travel from home to workplace (or wherever) and back again, at little or no cost to themselves and in an environmentally-friendly, pollution-free manner.

That perception however is not in itself enough to bring this about. If the conventional, foot-propelled child's scooter met all their requirements commuters would have adopted it long ago, but that has not happened. Above all it needs some inboard means of propulsion, but the immediately obvious propulsive mechanism of a conventional bicycle, thus its pedal-powered rotary cranks, is alas quite unsuitable for any kind of scooter construction. And if that problem could be solved, there still remains the need so to minimize the overall bulk of the device when not in vehicular use that it is then fit to be carried around by a commuter when on public transportation and/or stowed away at home or workplace, even perhaps beside his office desk.

It is the aim of this invention to reconcile all these many and varied problems, and thereby to meet the need for a personal vehicular accessory, capable of imparting wheeled mobility to a commuter's otherwise pedestrian phase.

The document FR 606 650 A discloses a personal wheeled vehicular accessory comprising an elongate foot-board having a rear wheel adjacent one end and a steerable front wheel adjacent the other end, a foldable steering column connected to the steerable wheel, and a propulsion mechanism for the rear wheel including a pair of treadle-type foot-pedals pivoted relative to the foot-board for rising and falling motion in anti-phase above the foot board, and means drivingly connecting the pedals to the rear wheel.

According to the present invention there is provided a personal wheeled vehicular accessory according to claim 1.

More particularly, the personal wheeled vehicular accessory takes the form of a scooter-type road-vehicle, in which the steering column and the steerable front wheel associated therewith are rotatably journalled at or adjacent to the forward end of the elongated foot-board, said assembly being hinged for pivotal movement between a generally upright, unfolded attitude at which it serves to enable a person standing thereon, thus the rider, to steer the vehicle and a generally horizontal, fully folded-up attitude at which it lays adjacent and substantially parallel to the foot-board, and in which this vehicle is capable of propulsion by the rising and falling up-and-down reciprocation of the foot-pedals each pivotally mounted at or adjacent to the rearward end of the foot-board, movable by the feet of the standing rider between an uppermost position above said foot-board at which the rider's weight can be applied via one or other of the foot-treadles to drive the vehicle forward, and a lowermost position in or adjacent to but substantially parallel with the foot-board, as well as a mechanical or hydraulic transmission between the rearward end of said foot-pedals and the rear wheel(s) which will translate the reciprocating, rising and falling, up-and-down motion of said foot-pedals into a rotary drive imparted to said rear wheel(s).

It may be noted that it is envisaged as possible that this vehicular accessory might have more than one rear-wheel, thus two - and this could have advantages of maintaining equilibrium when towed along the ground in its folded-up attitude, but for most other reasons it is preferred that it should have only one rear-wheel. And it is also envisaged as possible that this vehicular accessory might also include something in the nature of a saddle- structure, on which the rider could perch (at least when coasting along upon it) which might sometimes be an advantage, but for reasons of simplicity, economy and low-bulk in its folded-up attitude it is preferred that it shall not include any such saddle structure.

Subject to the two possibilities envisaged above, it is believed that the nature of a scooter is intuitively obvious, and indeed adequately clear from the previously - mentioned definition of a child's scooter, subject of course to the modifications introduced in this invention, thus inclusion of inboard propulsive mechanism and the provision of a facility for folding it up into a small-bulk personal accessory.

However, in case any further definition should be required, it might be said as follows. The characteristics which most distinguish a "scooter-type" construction from a normal, modern-day conventional bicycle would seem to be that the rider in use normally stands upon a foot-board which is low-slung, fairly close to the ground though of course with adequate ground-clearance, between fairly small front and rear wheels.

The elongate foot-board will be long enough to accommodate the length of the rider's feet (and in the case of this invention that part of the foot-pedals worked by the rider's feet) but little more than that. One might envisage a foot-board with a working length of roughly 40-50 centimetres. And the foot-board will be wide enough to accommodate the rider's feet side-by-side, but little more than that. One might envisage a foot-board with a width of roughly 25-30 centimetres.

The ground-clearance between the effective underside of the foot-board and the road-surface on which the vehicle runs will be enough to ensure that the side-edges of the foot-board are in no danger of fouling the road-surface when the vehicle is banked on a turn, but little more than that. One might envisage a ground-clearance of roughly 8-30 centimetres.

The front and rear wheels will normally be of the same size, and are characteristically smaller than those of a modern-day, conventional bicycle - almost certainly no more than half the diameter thereof, and usually only one-quarter to one-third the diameter thereof, possibly even less. One might envisage similarly-sized front and rear wheels, both having an effective radius (thus including tyres) in the range of roughly 7-16 centimetres, probably 10-13 centimetres.

And, while this must ultimately be largely dependent on the parameters of ground-clearance and wheel-radius adopted, as a generalization it would be expected that the level of the foot-board would be comparable with the level of the wheel-axles, neither greatly above nor greatly below that level - say within a range of 8±5 centimetres of the wheel-axis level.

All that having been said, it will be appreciated that by adopting this scooter-type construction it becomes possible to use rather small wheels and to support between them a low-slung foot-board with only minimal ground clearance. This would not be possible were the foot-propulsion means of the kind conventional in typical bicycle construction, that is to say rotatable pedal-cranks which require a fair-degree of ground-clearance to operate, and still more to be safe against fouling the road surface when the vehicle is banked on a turn. The absence of any saddle and the facility with which the steering column can be hinged to lie along the foot-platform, fairly closely adjacent and more or less parallel to it, have the result that the scooter-type vehicle of this invention when in its folded-up attitude is indeed of a certain unavoidable overall length but otherwise quite small in bulk.

Moreover it is a greatly preferred feature of the invention that the upper part of the rear wheel of the scooter-type vehicle and the mountings for the pedal(s) as well as the transmission mechanism for converting the reciprocating, up-and-down motion of the pedal(s) into a rotational drive imparted to the rear wheel should all be enclosed within an housing, since this not only serves as a so-called mudguard for the rear wheel but also, and perhaps more importantly, ensures that all moving parts which need to be greased or oiled are shielded from contact with the rider's legs when the vehicle is in use, and from soiling the rider's clothes (or those of passersby) when the scooter-type vehicle is folded-up and in use as a personal accessory.

The intention indeed is that when in its folded-up attitude the scooter-type vehicle of this invention should be of such an overall shape and dimensions that it can and will be either pushed or towed by its rider when a pedestrian, possibly in front of but more probably behind the rider-turned-pedestrian. To that end, it is very much preferred that either one end or the other of the foot-platform and associated assemblies should be provided with one or more trolley-wheel(s) which do not contact the road surface when the unfolded scooter is in use as a vehicle (thus with the foot-platform disposed substantially parallel to the road surface) but which are brought into ground-contact when the vehicle is in its folded-up attitude for use as a personal accessory, the trolley-wheel(s) then serving to enable the personal accessory to be readily pushed or towed along the roadway or pavement, or bumped up or down stairs or escalators, by the rider-turned-pedestrian.

It is also very important (if the overall aim of promoting this foldable scooter for use as a personal accessory is to be achieved) that the construction should be provided with a luggage-carrier which is so arranged and disposed that it will serve this function both when in use as a vehicle and also when in use as a pedestrian's accessory. Such a luggage-carrier is very necessary so that the standing rider of the vehicle is not distracted by the need to sling luggage about his person or to try to carry it in his hands, and also in order that when in use as a pedestrian's accessory the construction will serve as a shopping trolley, baby buggy or the like. The luggage-carrier can and advantageously will be mounted near the rear of the vehicle and the bottom of the pedestrian's accessory on the top of the housing there provided.

Many advantages of constructional simplicity and therefore economy flow from the adoption of this scooter-type structure. The vehicle is envisaged primarily for use in urban environments where there are smooth tarmacadam (asphalt) or other like roads, pavements, sidewalks or other surfaces on which the vehicle can run, so that there need be only a small ground-clearance beneath the foot-platform, hence the wheels can be of small diameter and provided with solid, non-pneumatic tyres - thereby minimizing initial manufacturing costs and largely eliminating any repair problems and expenses. In the absence of any saddle and corresponding saddle-support structure there is nothing save the steering column to be hinged down closely adjacent the foot-platform, thus greatly reducing the bulk of the folded-up vehicle when in use as a personal accessory, and this coupled with the absence of any danger to public safety (such as there would be if the vehicle were powered by an internal-combustion engine) for the first time really opens the way to the vehicle, in its personal accessory form, being carried on and off public transport.

In order still further to reduce the bulk of the folded-up vehicle in its personal accessory form, it is very desirable that the steering column should be capable of being hinged down as closely adjacent the foot-board as possible. One way of achieving this is to replace the normal "single-shaft" steering column (which with laterally-extending handlebars can be regarded as generally T-shaped) by a "twin-shafted" steering column (which can be regarded as generally U-shaped, and can be colloquially termed "cowhorn-handlebars") since then the arms of the U-shaped steering column can be arranged to embrace either side of the rear wheel. This is a very simple and satisfactory arrangement, but has the disadvantage that it leaves the front wheel in a plane normal to the foot-board.

Alternatively and perhaps preferably it can be arranged that on folding-up the steering column the front wheel(s) of the vehicle should be able to be rotated 90° out of the fore-and-aft plane, so as to lay more or less in the plane of the foot-board.

The steering column can be capable of being hinged back upon itself so that in fully-folded condition the upper section of the steering column will lay alongside its lower section.

At this point it is appropriate to say that the general principles of construction here set forth can of course be embodied in quite a variety of ways, and obviously desirable features which in themselves are well-known both can and should be incorporated as a matter of good engineering. Merely as an indication of this kind of thing, the personal vehicular accessory of this invention can operate without, but is the better for being equipped with a braking system, preferably of the caliper-brake type, operative on at least the rear-wheel and controlled and operated by Bowden-cable from the handlebar(s). Again, the driven rear-wheel axle will advantageously incorporate a conventional free-wheel mechanism, and perhaps even a multi-speed gearbox arrangement. It may be desirable (or for some purposes even necessary) for the vehicle to be fitted with lighting and/or reflector(s). The steering column and the front wheel will require to be set at a suitable castoring angle and with an appropriate lead. And so on - but these are all matters within the competence of competent engineers familiar with this kind of field, and no further reference is made herein to such features or others of a similar nature.

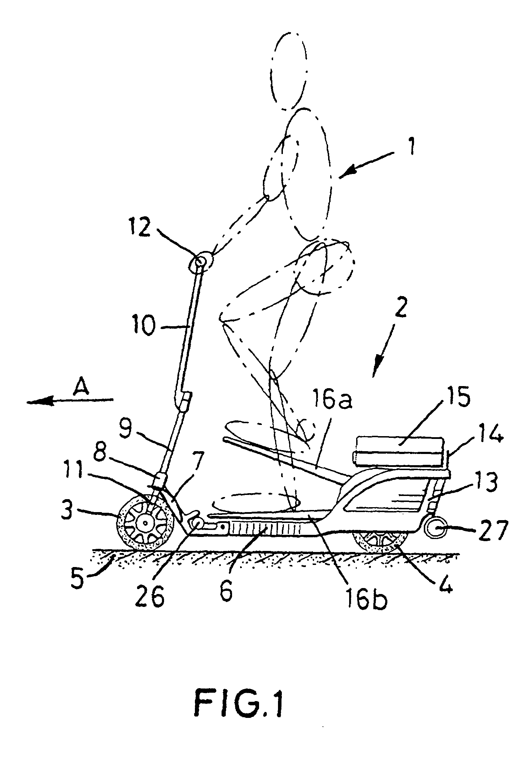

In order that this invention may be well understood one preferred embodiment thereof will now be described in more detail, though only by way of illustration, with reference to the accompanying merely schematic drawings, in which:-
Figure 1 is a side-elevational view of a treadle-type pedal-powered scooter-type personal accessory in its unfolded, vehicular form, and carrying a diagrammatic rider thereon;
Figure 2 is an enlarged, partly-cutaway view otherwise similar to Figure 1 of the lower, ground-adjacent parts of the rear of the same scooter-type vehicle, which reveals more details of the treadle-type pedal-powered drive-mechanism, though still in a schematic form;
Figure 3 shows a side-elevational view of the same scooter-type vehicle after its first-stage folding-up operation;
Figure 4 is a view similar to that of Figure 3 of the same vehicle after its second-stage folding-up operation;
Figure 5 is a view similar to that of Figures 3 and 4 of the same vehicle after its third and final-stage folding-up operation, which converts it into a personal accessory;
Figure 6 is a plan view from above, upon an enlarged scale, of the same scooter-type vehicle in its fully folded-up third-stage condition of Figure 5 above; and
Figure 7 is a view (to be compared and contrasted with that of Figure 1) which shows the fully-folded, third-stage personal vehicular accessory being towed behind a diagrammatic rider-turned-pedestrian.
Referring first to Figure 1, it will be seen that a rider, shown quite diagrammatically and generally indicated 1, is to be found standing upon and traveling with the scooter-type vehicle of this invention, generally indicated 2. That scooter comprises a front wheel 3 and a rear wheel 4, both running upon a flat, level ground surface 5, e.g. road or pavement in an urban environment.

Between the wheels 4 and 5 there is supported a generally-horizontal foot-board 6, low-slung (thus with quite small ground-clearance) between the wheels 4 and 5. As it travels in the direction of arrow A, the forward end of the foot-board 6 is provided with an upwardly inclined structure 7 on which at its upper end there is mounted a journal 8, which rotatably receives the lower section 9 of an hinged steering column 9, 10, the bottom part of said lower column-section 9 being bifurcated to provide forks 11 which embrace the front wheel 3 and engage its axle (not shown). The top end of the upper section 10 of the steering column is provided with two laterally-extending handlebars 12, by means of which the standing rider 1 can turn the steering column 9, 10 and thus the forks 11 and the front wheel 3 so as to steer the scooter-type vehicle.

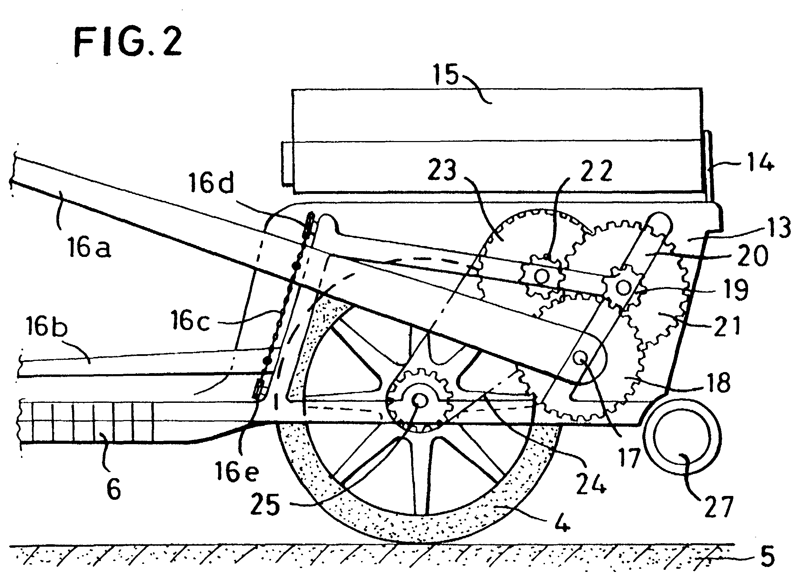

The rear wheel 4 is of course likewise carried on an axle (not shown) which is substantially enclosed within an housing 13, on top of which there is an L-shaped luggage-carrier 14, shown as supporting a package 15. Running forward from the housing 13 there are two treadle-type foot-pedals 16a and 16b which interconnect the propulsive mechanism for this scooter-type vehicle (to be described below with reference to Figure 2) with the respective feet of the standing rider 1. Each of these treadle-type pedals 16a and 16b can be reciprocated alternately up-and-down, in fact along a short section of the arc of a large-radius circle but effectively more or less vertically, between an uppermost position (see pedal 16a in Figures 1-3) at which the respective foot of the standing rider 1 is about to start driving that pedal downwards thus propelling the scooter forwards in the direction of arrow A, and a lowermost position (see pedal 16b in Figures 1-3) at which the other foot of the standing rider 1 has completed its downward driving stroke and brought pedal 16b into substantial alignment with the upper surface of the foot-platform 6.

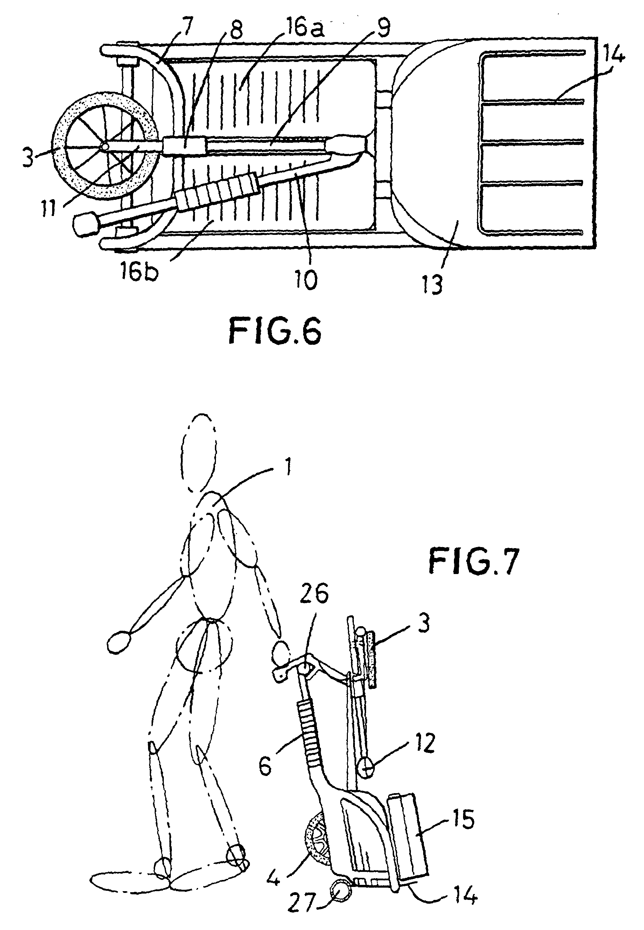

Referring now particularly to Figure 2, it will be seen that both the treadle-type foot-pedals 16a and 16b are supported for pivoting movement, about a common axis 17 arranged near the back of housing 13 and behind the rear wheel 4, so that the forward end of each pedal moves generally vertically, through an arc. A flexible tension member (such as a chain or steel wire 16c, Figure 6) is connected to the two pedals and passes over two pulleys 16d (and 16e) disposed above and below the two pedals, and between them, so that as one pedal falls, the other rises, in anti-phase.

Each pedal 16a and 16b is connected to a main cog-wheel 18 through a respective ratchet-and-pawl mechanism (not shown), arranged so that when the forward end of each pedal is driven downwards by the respective foot of the standing rider 1, the cog-wheel 18 is turned counterclockwise (in Figure 2), each pawl automatically riding over its ratchet as the respective pedal 16a and alternately 16b is raised again from its lowermost to its uppermost position ready at the latter for a further driving stroke from the respective foot of the standing rider 1.

The cog-wheel 18 in turn drives a pinion 19 rotatably supported on an upstanding arm 20 within the housing 13. The pinion 19 is integrated with a larger driving cog-wheel 21..... and so on, in any suitable gear-train As actually shown in Figure 2 the driving cog wheel 21 meshes with a further pinion 22, connected to a chain-wheel 23, driving a sprocket 25 through an endless chain 24, the sprocket 25 being connected (through a free-wheel mechanism, not shown) to the rear wheel 4.

It will be seen that with the rider-propelled scooter-type vehicle as so far described with reference to Figures 1 and 2, the intending rider 1 can very easily step onto the low-slung foot-board 6, or strictly-speaking onto one or other of the treadle-type foot-pedals 16a or 16b. Then, by alternately driving down first one foot and then the other, the standing rider 1 can through the pedals and other driving mechanism just described rotate the rear wheel 4 and drive the whole scooter-type vehicle forwards in the direction of arrow A, steering it by means of his hands on handlebars 12 which control the steering column 9, 10 and thus the front wheel 3.

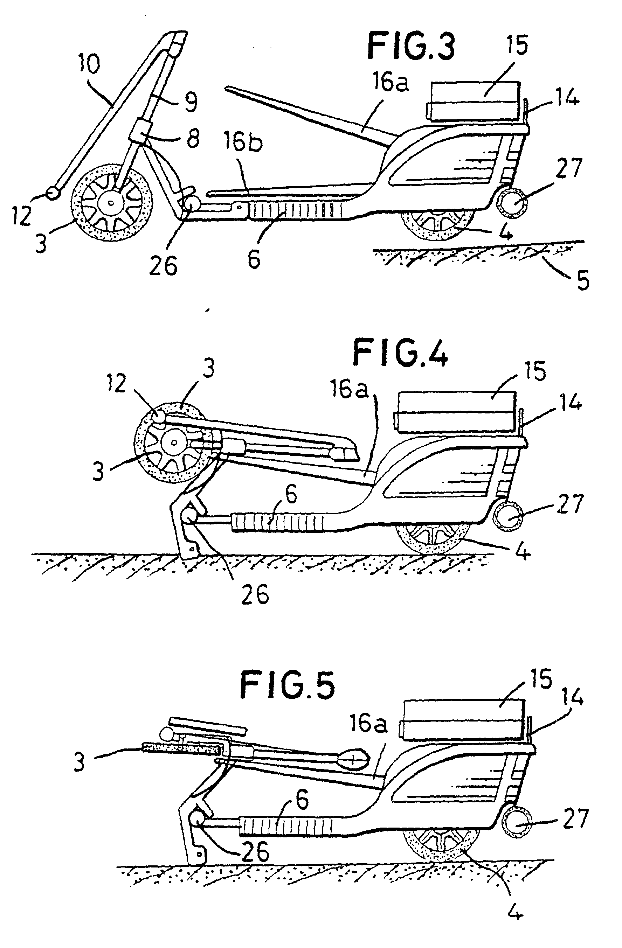

When the rider 1 wishes once more to become a pedestrian (as for instance when taking the scooter-type vehicle with him onto public transport, or when parking it in a confined space, or even when wishing to carry it into his office to stand beside his desk!) it will be seen from Figures 3, 4 and 5 that the scooter can be quite readily folded up into a closed position in which it becomes a very compact personal accessory.

Figure 3 shows the end of the first-stage of the folding operation, in which the upper section 10 of the steering column 9, 10 has been hinged down through slightly less than 180° so that the handlebars 12 are adjacent the front wheel 3.

Figure 4 shows the end of the second-stage of the folding operation, in which the now-adjacent sections 9 and 10 of the steering column, together with the front wheel 3 and the journal 8 in which the steering column is rotatably secured on the upper end of the inclined structure 7, are all rotated clockwise through about 90° around a pivot-point 26 provided at the forward end of foot-board 6, thus arriving at the position shown in Figure 4 where the lower section 9 of the steering column 9, 10 lays along, fairly adjacent to and more or less parallel with the foot-board 6.

The partly folded-up attitude achieved at the end of the second-stage of the folding operation, as shown in Figure 4, is already fairly compact, but the front wheel 3 still lays in the fore-and-aft vertical plane through the scooter-type vehicle. Figures 5 and 6 show how to achieve still greater compactness - by rotating the whole steering column and front wheel assembly (comprising the handlebars 12, the upper and lower steering column sections 10, 9, the forks 11 and the front wheel 3) through 90°, so that the front wheel 3 then lays in a plane substantially parallel with the plane of the foot-platform 6, thus at last in the fully folded-up attitude.

The fully-folded vehicle of Figures 5 and 6 is then in a condition to be used as a personal accessory. As can best be seen from Figure 7, the rider-turned-pedestrian 1 can readily drag the folded up-vehicle along behind him on small trolley wheels 27, provided at the rear bottom corner of housing 13, where they do not contact the ground during use of the scooter-type vehicle as shown in Figure 1, but where they make ground-contact and facilitate movement of the personal accessory as shown in Figure 7.

## Claims

1. A personal wheeled vehicular accessory (2) comprising an elongate foot-board (6) having a rear wheel (4) at or adjacent one end, a steerable front wheel (3) at or adjacent the other end, and a foldable steering column (9,10) connected to the steerable wheel, said steerable wheel-and-column assembly being hinged for pivotal movement via a pivot-point (26) provided at the forward end of the foot-board, between a generally upright, unfolded attitude at which it serves to enable a person standing thereon, thus the rider (1), to steer the vehicle and a generally horizontal, fully folded-up attitude at which it lays adjacent and substantially parallel to the foot-board, and a propulsion mechanism for the rear wheel including a pair of treadle-type foot-pedals (16a,16b) pivoted relative to the foot-board for rising and falling motion in anti-phase at least mostly above the foot-board, and means drivingly connecting the pedals to the rear wheel.

2. A personal wheeled vehicular accessory (2) as claimed in claim 1, in the form of a scooter-type road-vehicle wherein the steering column (9,10) and the steerable front wheel (3) associated therewith are rotatably joumalled (8) at or adjacent to the forward end of the elongate foot-board (6), and in which this vehicle is capable of propulsion by the rising and falling up-and-down reciprocation of treadle-type foot-pedals (16a,16b) each pivotally mounted at or adjacent to the rearward end of the foot-board, movable by the feet of the standing rider (1) between an uppermost position above said foot-board at which the rider's weight can be applied via one or other of the foot-pedals to drive the vehicle forward, and a lowermost position in or adjacent to but substantially parallel with the foot-board, as well as a mechanical or hydraulic transmission between the rearward end of said foot-treadles and the rear wheel(s) (4) which will translate the reciprocating, rising and falling, up-and-down motion of said foot-pedals into a rotary drive imparted to said rear wheel(s).

3. A personal wheeled vehicular accessory (2) as claimed in any of the preceding claims, in which the elongate foot-board (6) has a working length in the range of from 40 to 50 centimetres, a width in the range of from 25 to 30 centimetres, and a ground-clearance in the range of from 8 to 30 centimetres, and which has equi-sized front and rear wheels (3,4) both having an effective radius in the range of from 7 to 16 centimetres, and the level of the foot-board (6) lies within a range of 8 ± 5 centimetres above or below the wheel-axis level.

4. A personal wheeled vehicular accessory (2) as claimed in any of the preceding claims, in which the upper part of the rear wheel (4) of the scooter-type vehicle and the mountings for the pedal(s) (16a,16b) as well as the transmission mechanism for converting the reciprocating, up-and-down motion of the pedal(s) into a rotational drive imparted to the rear wheel are all enclosed within an housing (13) serving both as a mudguard for the rear wheel and also to shield all moving parts which need to be greased or oiled.

5. A personal wheeled vehicular accessory (2) as claimed in any of the preceding claims, in which one end of the foot-board (6) and associated assemblies is provided with one or more trolley-wheel(s) (27) which do not contact the road surface (5) when the opened-out scooter is in use as a vehicle but which are brought into ground-contact when the vehicle is folded-up into its closed position for use as a pedestrian's accessory, said trolley-wheel(s) then serving to enable the pedestrian's accessory to be readily pushed or towed by the rider-turned-pedestrian (1).

6. A personal wheeled vehicular accessory (2) as claimed in any of the preceding claims, which is provided with a luggage-carrier (14) so arranged and disposed that it will serve this function both when the vehicular accessory is in use as a scooter-type vehicle and also when in use as a pedestrian's accessory, thus serving as a luggage trolley.

7. A dual-purpose personal wheeled vehicular-accessory (2) as claimed in claim 6, wherein the luggage-carrier (14) is mounted at the rear of the vehicle on the housing (13) there provided.

8. A personal wheeled vehicular accessory (2) as claimed in any of the preceding claims, having a twin-shafted, generally U-shaped steering column arranged so as to embrace either side of the rear wheel (4) and associated housing (13), when the accessory is in its fully folded-up attitude.

9. A personal wheeled vehicular accessory (2) as claimed in any of claims 1 to 7, having a single-shafted steering column (10), and in which when the steerable wheel-and-column assembly is hinged down closely adjacent the foot-board (6), the front wheel(s) (3) of the vehicle can be rotated 90° out of the fore-and-aft plane, so as to lay substantially in the plane of the foot-board.

10. A personal wheeled vehicular accessory (2) as claimed in any of claims 1 to 7, in which the steering column (9,10) is so constructed as to be capable of being hinged back upon itself in such a manner that in fully-folded condition the upper section (10) of the steering column will lie alongside its lower section (9).

## Patentansprüche

1. Mit Rädern versehenes Personen-Fortbewegungshilfsmittel (2) mit einem langen Trittbrett (6), das ein Hinterrad (4) an oder unmittelbar benachbart zu einem Ende, ein lenkbares Vorderrad (3) an oder unmittelbar benachbart zu dem anderen Ende und eine zusammenklappbare Lenksäule (9, 10) hat, die mit dem lenkbaren Rad verbunden ist, wobei die lenkbare Rad-und-Säulen-Anordnung für Schwenkbewegungen um einen an dem Vorderende des Trittbrettes vorgesehenen Schwenkpunkt (26) zwischen einer im großen und ganzen aufrechten, auseinandergeklappten Stellung, in der sie dazu dient, daß eine darauf stehende Person, also der Fahrer (1), das Fahrzeug lenken kann, und einer im großen und ganzen horizontalen, vollständig zusammengeklappten Stellung, in der sie unmittelbar benachbart und im wesentlichen parallel zu dem Trittbrett liegt, angelenkt ist, und einem Antriebsmechanismus für das Hinterrad, der ein Paar von tretkurbelartigen Fußpedalen (16a, 16b), die relativ zu dem Trittbrett für aufsteigende und fallende gegenphasige Bewegung zumindest hauptsächlich über dem Trittbrett schwenkbar gelagert sind, und Mittel aufweist, die die Pedale antreibend mit dem Hinterrad verbinden.

2. Mit Rädern versehenes Personen-Fortbewegungshilfsmittel (2) gemäß Anspruch 1 in der Form eines rollerartigen Straßenfahrzeuges, wobei die Lenksäule (9, 10) und das damit verbundene lenkbare Vorderrad (3) drehbar an oder unmittelbar benachbart zu dem Vorderende des langen Trittbrettes (6) gelagert (8) sind und wobei dieses Fahrzeug durch die aufsteigende und fallende Auf- und Abwärtsbewegung von tretkurbelartigen Fußpedalen (16a, 16b) angetrieben werden kann, von denen jedes schwenkbar an oder unmittelbar benachbart zu dem rückwärtigen Ende des Trittbrettes angebracht ist und durch den Fuß des stehenden Fahrers (1) zwischen einer obersten Position über dem Trittbrett, in der das Gewicht des Fahrers über das eine oder das andere der Fußpedale verwendet werden kann, um das Fahrzeug nach vorne anzutreiben, und einer untersten Position in oder unmittelbar benachbart aber im wesentlichen parallel zu dem Trittbrett bewegbar ist, sowie ein mechanisches oder hydraulisches Übersetzungsmittel zwischen dem rückwärtigen Ende der Fußpedale und dem Hinterrad (den Hinterrädern) (4), das die hin- und hergehende, aufsteigende und fallende Auf- und Abwärtsbewegung der Fußpedale in einen auf das Hinterrad (die Hinterräder) übertragenden Drehantrieb umzusetzt.

3. Mit Rädern versehenes Personen-Fortbewegungshilfsmittel (2) gemäß einem der vorhergehenden Ansprüche, in welchem das lange Trittbrett (6) eine Nutzlänge im Bereich von 40 bis 50 Zentimetern, eine Breite im Bereich von 25 bis 30 Zentimetern und einen Bodenfreiheit im Bereich von 8 bis 30 Zentimetern aufweist und welches gleichgroße Vorder- und Hinterräder (3, 4) hat, die beide einen effektiven Radius im Bereich von 7 bis 16 Zentimetern aufweisen, und wobei die Höhenlage des Trittbrettes (6) innerhalb eines Bereiches von 8 ± 5 Zentimetern über oder unter der Höhenlage der Radachse liegt.

4. Mit Rädern versehenes Personen-Fortbewegungshilfsmittel (2) gemäß einem der vorhergehenden Ansprüche, in welchem sowohl der Oberteil des Hinterrades (4) des rollerartigen Fahrzeuges und die Befestigungen für das (die) Pedal(e) (16a, 16b) als auch der Übersetzungsmechanismus zum Umsetzen der hin- und hergehenden, Auf- und Abwärtsbewegung des Pedals (der Pedale) in einen auf das Hinterrad übertragenden Drehantrieb alle in einem Gehäuse (13) eingeschlossen sind, das sowohl als Schutzblech für das Hinterrad dient als auch dazu, alle sich bewegenden Teile, die geschmiert oder geölt werden müssen, abzuschirmen.

5. Mit Rädern versehenes Personen-Fortbewegungshilfsmittel (2) gemäß einem der vorhergehenden Ansprüche, in welchem ein Ende des Trittbrettes (6) und der zugehörigen Anordnungen mit einem oder mehr Handwagenrädern (27) versehen ist, die die Straßenoberfläche (5) nicht berühren, wenn der ausgeklappte Roller als Fahrzeug in Benutzung ist, aber die in Bodenkontakt gebracht werden, wenn das Fahrzeug für die Verwendung als ein Hilfsmittel für Fußgänger in seine geschlossene Stellung zusammengeklappt ist, wobei das Handwagenrad (die Handwagenräder) dann dazu dient (dienen), daß das Hilfsmittel für Fußgänger leicht von einem zum Fußgänger gewordenen Fahrer (1) geschoben oder gezogen werden kann.

6. Mit Rädern versehenes Personen-Fortbewegungshilfsmittel (2) gemäß einem der vorhergehenden Ansprüche, das mit einem Gepäckträger (14) ausgestattet ist, der so ausgestaltet und angeordnet ist, daß er diese Funktion sowohl erfüllen wird, wenn das Fortbewegungshilfsmittel als ein rollerartiges Fahrzeug in Benutzung ist als auch wenn es als ein Hilfsmittel für Fußgänger in Benutzung ist, also als ein Gepäckwagen dient.

7. Mit Rädern versehenes Doppelzweck-Personen-Fortbewegungshilfsmittel (2) gemäß Anspruch 6, wobei der Gepäckträger (14) am Heck des Fahrzeuges auf dem dort vorgesehenen Gehäuse (13) angebracht ist.

8. Mit Rädern versehenes Personen-Fortbewegungshilfsmittel (2) gemäß einem der vorhergehenden Ansprüche, das eine doppelwellige, allgemein U-förmige Lenksäule hat, die ausgestaltet ist, um jede Seite des Hinterrades (4) und des zugehörigen Gehäuses (13) zu umfassen, wenn das Hilfsmittel in seiner vollständig zusammengeklappten Stellung ist.

9. Mit Rädern versehenes Personen-Fortbewegungshilfsmittel (2) gemäß einem der Ansprüche 1 bis 7, das eine einwellige Lenksäule (10) hat und in welchem, wenn die lenkbare Rad-und-Säulen-Anordnung nach unten unmittelbar benachbart zu dem Trittbrett (6) geklappt ist, das Vorderrad (die Vorderräder) (3) des Fahrzeuges um 90° aus der Längsebene gedreht werden kann (können), so daß es (sie) im wesentlichen in der Ebene des Trittbrettes liegt (liegen).

10. Mit Rädern versehenes Personen-Fortbewegungshilfsmittel (2) gemäß einem der Ansprüche 1 bis 7, in welchem die Lenksäule (9, 10) so konstruiert ist, daß sie derart auf sich selbst zurückgeklappt werden kann, daß der obere Abschnitt (10) der Lenksäule im vollständig zusammengeklappten Zustand Seite an Seite mit ihrem unteren Abschnitt (9) liegt.

## Revendications

1. Accessoire sous forme de véhicule roulant personnel (2) comprenant un plancher (6) allongé possédant une roue arrière (4) à une première extrémité ou près de celle-ci, une roue avant directrice (3) à l'autre extrémité ou près de celle-ci, et une colonne de direction pliable (9, 10) reliée à la roue directrice, ledit ensemble roue directrice et colonne étant articulé pour un mouvement pivotant via un point de pivotement (26) prévu à l'extrémité avant du plancher, entre une attitude déployée, généralement dressée, dans laguelle il sert à permettre à une personne debout dessus, donc l'utilisateur (1), de diriger le véhicule, et une attitude entièrement repliée, généralement horizontale, dans laquelle il s'étend adjacent et sensiblement parallèle au plancher, et un mécanisme de propulsion pour la roue arrière comprenant une paire de pédales du type à mouvement alternatif (16a, 16b) pivotantes par rapport au plancher pour un mouvement de monte-et-baisse en opposition de phase au moins majoritairement au-dessus du plancher, et des moyens reliant les pédales avec la roue arrière pour son entraînement.

2. Accessoire sous forme de véhicule roulant personnel (2) selon la revendication 1, sous la forme d'un véhicule routier du type scooter, dans lequel la colonne de direction (9, 10) et la roue avant directrice (3) qui y est associée, sont montés en tourillonnement rotatif (8) à ou près de l'extrémité antérieure du plancher allongé (6), et dans lequel ce véhicule est capable de propulsion par le mouvement alternatif de monte-et-baisse de pédales du type à mouvement alternatif (16a, 16b) montées chacune à pivotement à ou près de l'extrémité postérieure du plancher, mobiles par les pieds de l'utilisateur debout (1) entre une position supérieure au-dessus du plancher en laquelle le poids de l'utilisateur peut être appliqué via l'une ou l'autre des pédales pour faire avancer le véhicule, et une position inférieure dans le plancher ou près de celui-ci mais sensiblement parallèle à celui-ci, ainsi qu'une transmission mécanique ou hydraulique entre l'extrémité arrière de ces pédales et la ou les roue(s) arrière (4), qui va transformer le mouvement alternatif de monte-et-baisse des pédales en un entraînement rotatif imparti à ladite ou auxdites roue(s) arrière.

3. Accessoire sous forme de véhicule roulant personnel (2) selon l'une quelconque des revendications précédentes, dans lequel le plancher allongé (6) a une longueur de travail de l'ordre de 40 à 50 cm, une largeur de l'ordre de 25 à 30 cm, et une garde au sol de l'ordre de 8 à 30 cm, et qui possède des roues avant et arrière (3, 4) de même taille ayant toutes deux un rayon effectif de l'ordre de 7 à 16 cm, et le niveau du plancher (6) se trouve à 8 ± 5 cm au-dessus ou au-dessous du niveau de l'axe des roues.

4. Accessoire sous forme de véhicule roulant personnel (2) selon l'une quelconque des revendications précédentes, dans lequel la partie supérieure de la roue arrière (4) du véhicule de type scooter et les montages pour la ou les pédale(s) (16a, 16b) ainsi que le mécanisme de transmission pour convertir le mouvement alternatif de monte-et-baisse de la ou des pédale(s) en entraînement rotatif imparti à la roue arrière, sont tous enfermés dans un carter (13) servant à la fois de garde-boue pour la roue arrière et aussi pour protéger toutes les parties mobiles nécessitant d'être graissées ou huilées.

5. Accessoire sous forme de véhicule roulant personnel (2) selon l'une quelconque des revendications précédentes, dans lequel une extrémité du plancher (6) et des ensembles associés est munie d'une ou plusieurs roulette(s) (27) qui sont hors de contact de la chaussée (5) lorsque le scooter déployé est en service en tant que véhicule mais qui sont amenées en contact avec le sol lorsque le véhicule est replié dans sa position fermée pour servir d'accessoire pour piéton, cette ou ces roulette(s) servant ensuite à permettre à l'accessoire de piéton d'être aisément poussé ou tiré par l'utilisateur converti en piéton (1).

6. Accessoire sous forme de véhicule roulant personnel (2) selon l'une quelconque des revendications précédentes, qui est muni d'un porte-bagages (14) agencé et disposé de façon à assurer cette fonction à la fois lorsque l'accessoire sous forme de véhicule est utilisé en tant que véhicule type scooter et aussi lorsqu'il est utilisé en tant qu'accessoire pour piéton, servant donc de chariot à bagages.

7. Accessoire sous forme de véhicule roulant personnel (2) à double usage selon la revendication 6, dans lequel le porte-bagages (14) est monté à l'arrière du véhicule sur le carter (13) qui y est prévu.

8. Accessoire sous forme de véhicule personnel à roues (2) selon l'une quelconque des revendications précédentes, possédant une colonne de direction à deux tiges, en forme générale de U, agencée de façon à enfourcher chaque côté de la roue arrière (4) et du carter associé (13) lorsque l'accessoire est dans son attitude complètement repliée.

9. Accessoire sous forme de véhicule roulant personnel (2) selon l'une quelconque des revendications 1 à 7, possédant une colonne de direction à une seule tige (10) et dans lequel lorsque l'ensemble roue directrice et colonne est pivoté vers le bas tout près du plancher (6), la ou les roue(s) avant (3) du véhicule peu(ven)t être tournée(s) à 90° du plan longitudinal médian de façon à s'étendre sensiblement dans le plan du plancher.

10. Accessoire sous forme de véhicule roulant personnel (2) selon l'une quelconque des revendications 1 à 7, dans lequel la colonne de direction (9, 10) est construite de façon à être capable d'être rabattue sur elle-même par articulation de telle manière qu'à l'état complètement replié, la partie supérieure (10) de la colonne de direction s'étend le long de sa partie inférieure (9).
